# EUROPEAN PATENT SPECIFICATION

(11) **EP 2 403 061 B1**
(45) Date of publication and mention of the grant of the patent: **05.04.2017**
(21) Application number: 11171586.8
(22) Date of filing: 27.06.2011
(51) Int. Cl.: H01Q 1/24

(54) **Method and apparatus for controlling multi band antenna in mobile communication terminal**
Verfahren und Vorrichtung zur Steuerung einer Multibandantenne in einem mobilen Kommunikationsendgerät
Procédé et appareil pour le contrôle d'une antenne multibande dans un terminal de communication mobile

(30) Priority: 29.06.2010 KR 20100061657
(43) Date of publication of application: 04.01.2012
(73) Proprietor: Samsung Electronics Co., Ltd., Suwon-si, Gyeonggi-do, 443-742 (KR)
(72) Inventor: Park, Jung-Ho, Gyeonggi-do (KR); Ko, Sung-Hwan, Gyeonggi-do (KR); Hong, Suk-Chan, Gyeongbuk (KR); Jung, Young-Hwan, Gyeonggi-do (KR)
(74) Representative: HGF Limited

(56) References cited:
- EP-A1- 1 553 658
- WO-A2-2008/055039
- US-A1- 2002 183 013
- US-A1- 2003 153 348
- US-A1- 2003 219 035
- US-A1- 2008 158 076

## Description

### BACKGROUND OF THE INVENTION

### 1. Field of the Invention:

The present invention relates to a method and apparatus for controlling a multi-band antenna in a mobile communication terminal. More particularly, the present invention relates to a method and apparatus for controlling the resonance frequency of a multi-band antenna in a mobile communication terminal.

### 2. Description of the Related Art:

Communication technology developments have resulted in mobile communication terminals that support a plurality of frequency bands while using one antenna. A mobile communication terminal of the related art varies the resonance frequency of an antenna using a switch to transmit/receive signals of multiple frequency bands.

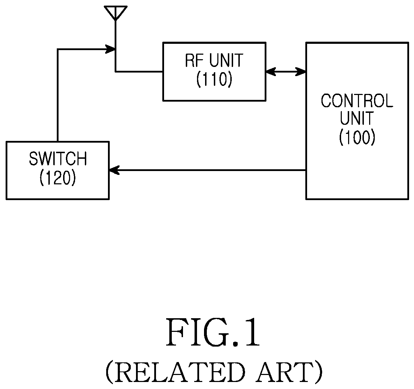

FIG. 1 is a block diagram of a mobile communication terminal of the related art.

Referring to FIG. 1, the mobile communication terminal of the related art includes a control unit 100, a Radio Frequency (RF) unit 110, and a switch 120. The control unit 100 performs a function for changing a current frequency band according to a technique of the related art. The control unit 100 determines whether to change the current frequency band, according to a region where the mobile communication terminal is located. If the current frequency band is to be changed, the control unit 100 outputs a band control signal for processing a signal corresponding to a target frequency band, to the RF unit 110 and provides a switching control signal for switching to the target frequency band, to the switch 120. According to the switching control signal, the switch 120 changes the resonance frequency of an antenna so that the antenna can transmit/receive signals of the target frequency band. According to the band control signal, the RF unit 110 processes a signal corresponding to the target frequency band, in the signal received from the antenna.

As described above, the mobile communication terminal of the related art has two output ports for outputting the band control signal and the switching control signal generated by the control unit 100 to change the current frequency band, performs a separate operation for generating each of the two control signals, and performs time synchronization between the two control signals. Thus, it is difficult to use the above technique in a mobile communication terminal that has no available ports in a modem chip serving as the control unit. Also, as compared to other techniques of the related art, the above technique increases the operation load of the mobile communication terminal and may be difficult to produce and develop.

The above information is presented as background information only to assist with an understanding of the present disclosure. No determination has been made, and no assertion is made, as to whether any of the above might be applicable as prior art with regard to the present invention.

US-2003/0219035-A1 discloses a wireless communication device including a reconfigurable antenna and one or more wireless transceivers coupled to the antenna. The reconfigurable antenna can be dynamically configured to transmit and receive wireless signals at a plurality of frequencies and bandwidths. A processor core is coupled to the reconfigurable antenna and the wireless transceivers. The processor core dynamically controls the configuration of the reconfigurable antenna and processes the wireless signal transmitted and received at the plurality of frequencies.

EP-1553658-A1 discloses a communication system incorporating a self-structuring antenna system coupled to multiple communication devices, such as receivers, in a multiplex arrangement. One of the communication devices is employed in a search process to select an antenna configuration suitable for another of the communication devices. The system controls and coordinates the search process for the communication devices.

WO-2008/055039-A2 discloses an adaptable antenna system which uses small, narrow-band and frequency adaptable antennas to provide coverage to a wide range of wireless modes and frequency bands on a host wireless device. The antennas have narrow pass-band characteristics, require minimal space on the host device, and allow for a small form factor. The frequency tunability further allows for a fewer number of antennas to be used. The operation of the antennas may be adaptably relocated from unused modes to in-use modes to maximize performance. These features of the antennas result in cost and size reductions. In another aspect, the antennas may be broadband antennas.

US-2002/0183013-A1 discloses a programmable RF system with tunable antennas.

### SUMMARY OF THE INVENTION

It is an aim of embodiments of the present invention are to address at least the above-mentioned problems and/or disadvantages and to provide at least the advantages below. Accordingly, embodiments of the present invention provide a method and apparatus for controlling a resonance frequency of a multi-band antenna in a mobile communication terminal.

Another aim of embodiments of the present invention is to provide a method and apparatus for controlling a transmission/reception (TX/RX) path and an antenna resonance frequency in a mobile communication terminal by using one control signal.

Another aim of embodiments of the present invention is to provide a method and apparatus for sharing a control signal between a Radio Frequency (RF) switching module for determining a TX/RX path, and a switch for varying the resonance frequency of an antenna, in a mobile communication terminal.

According to a first aspect of the present invention there is provided an apparatus for controlling a multi-band antenna in a mobile communication terminal, the apparatus comprising: a modem arranged to output a first control signal corresponding to a target frequency band; an antenna unit comprising: the multi-band antenna arranged to support multiple frequency bands and to transmit/receive signals according to the resonance frequency; and a switch arranged to change the resonance frequency of the multi-band antenna according to the first control signal; a Radio Frequency RF processing unit including a plurality of transmission/reception TX/RX paths arranged to process TX/RX signals in different frequency bands received from or to be transmitted to the multi-band antenna; and a switch module arranged to connect the multi-band antenna to one of the TX/RX paths according to the first control signal; wherein the switch of the antenna unit is arranged to receive the same first control signal aa the switch module by receiving the control signal through a signal line branching from a signal line through which the modem provides the first control signal to the switch module.

According to a second aspect of the present invention there is provided a method for controlling a multi-band antenna in a mobile communication terminal, the method comprising: outputting, by a modem, a first control signal corresponding to a target frequency band; changing, by a switch of an antenna unit further comprising the multi-band antenna, a resonance frequency of the multi-band antenna supporting multiple frequency bands according to the first control signal; and connecting, by a switch module, the multi-band antenna to one of a plurality of transmission/reception TX/RX paths arranged to process TX/RX signals in different frequency bands received from or to be transmitted to the multi-band antenna according to the first control signal; wherein the switch of the antenna unit is arranged to receive the same first control signal as the switch module by receiving the control signal through a signal line branching from a signal line through which the modem provides the first control signal to the switch module.

Other aspects, advantages, and salient features of the invention will become apparent to those skilled in the art from the following detailed description, which, taken in conjunction with the annexed drawings, discloses exemplary embodiments of the invention

### BRIEF DESCRIPTION OF THE DRAWINGS

The above and other aspects, features, and advantages of certain exemplary embodiments of the present invention will become more apparent from the following description taken in conjunction with the accompanying drawings, in which:
FIG. 1 is a block diagram of a mobile communication terminal of the related art;
FIG. 2 is a block diagram of a mobile communication terminal according to an exemplary embodiment of the present invention;
FIG. 3 is a flow diagram illustrating a process for changing a frequency band in a mobile communication terminal according to an exemplary embodiment of the present invention;
FIG. 4 is a diagram illustrating a change of a frequency band under the control of a switch in a mobile communication terminal according to an exemplary embodiment of the present invention;
FIGs. 5A and 5B are diagrams illustrating schemes for changing a frequency band by a logic element in a mobile communication terminal according to an exemplary embodiment of the present invention; and
FIGs. 6A and 6B are diagrams illustrating schemes for changing a frequency band by a logic element in a mobile communication terminal according to an exemplary embodiment of the present invention.

Throughout the drawings, like reference numerals will be understood to refer to like parts, components and structures

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions or constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention provide a method and apparatus for controlling a transmission/reception (TX/RX) path and an antenna resonance frequency in a mobile communication terminal by using one control signal.

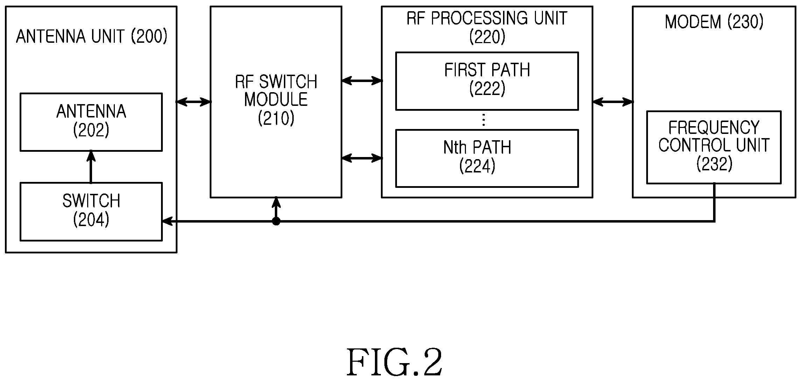

FIG. 2 is a block diagram of a mobile communication terminal according to an exemplary embodiment of the present invention.

Referring to FIG. 2, a mobile communication terminal according to an exemplary embodiment of the present invention includes an antenna unit 200, a Radio Frequency (RF) switch module 210, an RF processing unit 220, and a modem 230. The antenna unit 200 includes an antenna 202 and a switch 204. The RF processing unit 220 includes N number of paths 222 and 224. The modem 230 includes a frequency control unit 232.

The antenna unit 200 varies a resonance frequency according to a control signal received from the modem 230, to transmit/receive an RF signal corresponding to a target frequency band.

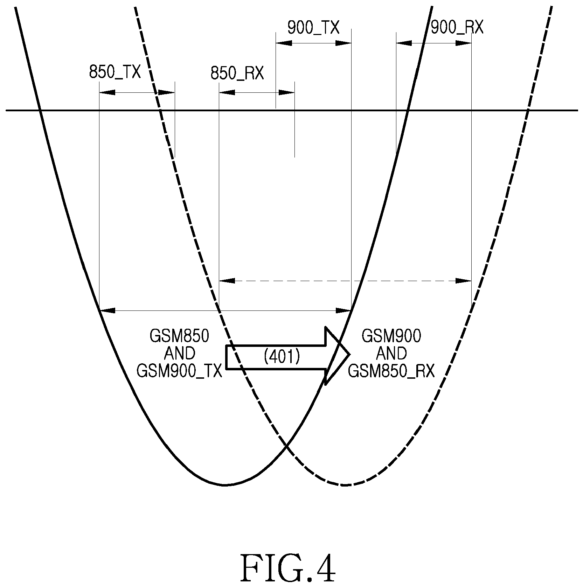

The switch 204 of the antenna unit 200 changes the resonance frequency of the antenna 202 by performing a switching operation according to a control signal received from the modem 230. The switch 204 receives the same control signal as the RF switch module 210 by receiving the control signal through a signal line branching from a signal line through which the modem 230 provides the control signal to the RF switch module 210. If the modem 230 provides control signals to the RF switch module 210 through a plurality of signal lines, the switch 204 may receive a result signal obtained by using a logic circuit (e.g., an AND gate or a NOR gate) to combine a plurality of signal lines branching from the above signal lines. An example of changing the resonance frequency of the antenna 202 is described below with reference to FIGs. 4 through 6B.

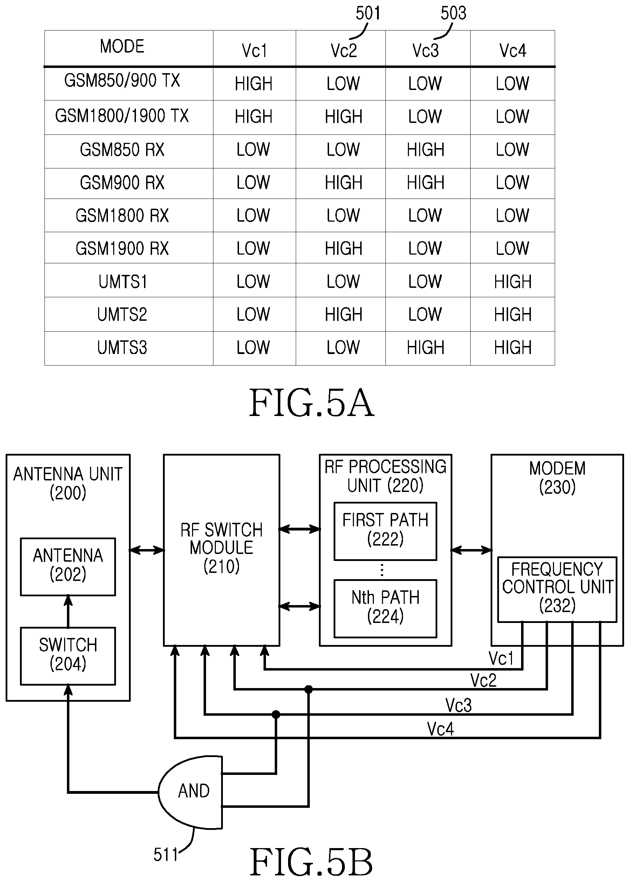

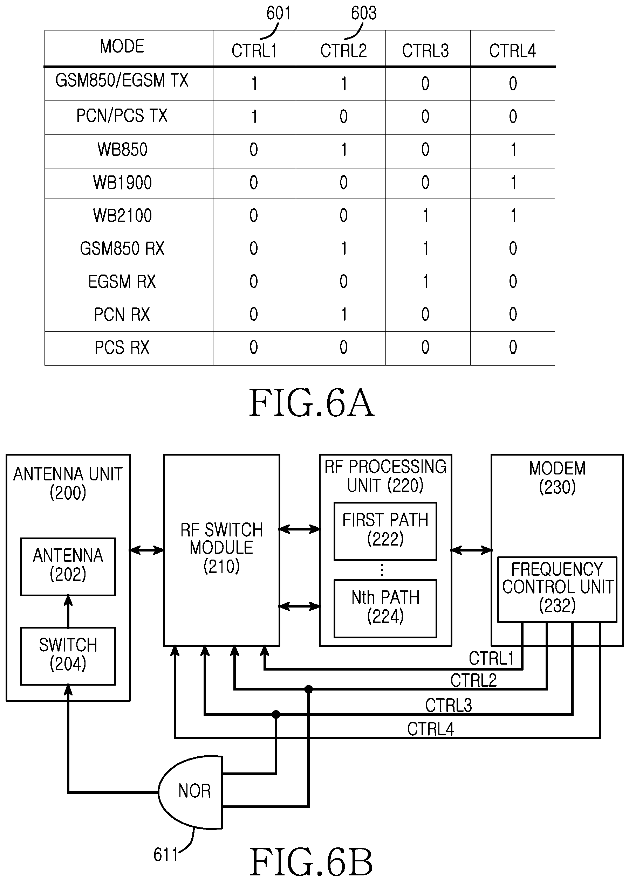

FIG. 4 is a diagram illustrating a change of a frequency band under the control of a switch in a mobile communication terminal according to an exemplary embodiment of the present invention. FIGs. 5A and 5B are diagrams illustrating schemes for changing a frequency band by a logic element in a mobile communication terminal according to an exemplary embodiment of the present invention. FIGs. 6A and 6B are diagrams illustrating schemes for changing a frequency band by a logic element in a mobile communication terminal according to an exemplary embodiment of the present invention.

Referring to FIGs. 4, 5B and 6B, if the mobile communication terminal is to change the frequency band from GSM850 to GSM900 as denoted by arrow 401 illustrated in FIG. 4, the switch 204 may receive the control signal through an AND gate 511 or a NOR gate 611 as illustrated in FIGs. 5B and 6B. FIGs. 5A, 5B, 6A and 6B illustrate schemes for changing the frequency band by an AND gate 511 and a NOR gate 611 in the mobile communication terminal according to an exemplary embodiment of the present invention. FIGs. 5A, 5B, 6A and 6B illustrate an exemplary case where the modem 230 outputs signals to the RF switch module 210 through four signal lines. As illustrated in FIG. 5A, if the mobile communication terminal is to change the frequency band to GSM900, the modem 230 may be designed to output a signal low/high/high/low through a signal line Vc1/Vc2/Vc3/Vc4. In this case, as illustrated in FIG. 5B, the mobile communication terminal may further include an AND gate 511 for performing an AND operation on two signals received from the signal lines Vc2 501 and Vc3 503 and providing the operation result to the switch 204, so that the switch 204 changes a ground point of the antenna 202 according to an output signal of the AND gate 511 to enable the use of a GSM900 band.

As illustrated in FIG. 6A, if the mobile communication terminal is to change the frequency band to EGSM900, the modem 230 may be designed to output a signal low/low/high/low through a signal line CTRL1/CTRL2/CTRL3/CTRL4. In this case, as illustrated in FIG. 6B, the mobile communication terminal may further include a NOR gate 611 for performing a NOR operation on two signals received from the signal lines CTRL1 601 and CTRL2 603 and providing the operation result to the switch 204, so that the switch 204 changes a ground point of the antenna 202 according to an output signal of the NOR gate 611 to enable the use of an EGSM900 band.

Adding an AND gate or a NOR gate according to the values of signals outputted through signal lines as illustrated in FIGs. 5A, 5B, 6A and 6B are merely exemplary embodiments of the present invention, and the mobile communication terminal may further include other logic circuits according to various embodiments. Also, the mobile communication terminal may further include a plurality of logic circuits. Although it has been described that the logic circuit is designed to consider only one frequency band, the logic circuit may also be designed to consider all frequency bands supported by the mobile communication terminal.

An operation of changing the resonance frequency of the antenna 202 by the switch 205 may be performed using a scheme of the related art such as an impedance matching scheme. For example, the switch 205 may change the ground condition of the antenna 202 to change the resonance frequency of the antenna 202. The antenna 202 receives an RF signal corresponding to the target frequency band by using the resonance frequency changed according to a switching operation of the switch 204, and provides the received RF signal to the RF switch module 210. Also, the antenna 202 receives a signal from the RF switch module 210 and transmits the received signal by radio.

According to a control signal received from the modem 230, the RF switch module 210 performs a switching operation to connect the antenna unit 200 and the RF processing unit 220. According to the control signal, the RF switch module 210 connects the antenna unit 200 to one of a plurality of TX/RX paths included in the RF processing unit 220. Herein, the control signal may comprise as many bits as the number of the TX/RX paths to indicate which of the TX/RX paths the antenna unit 200 will be connected to. For example, if the RF processing unit 220 includes four TX paths or four RX paths, when receiving a control signal '0100' from the modem 230, the RF switch module 210 may connect the antenna unit 200 to the path corresponding to the second bit among the four TX paths or the four RX paths. Also, a plurality of signal lines corresponding to the TX/RX paths may be disposed between the RF switch module 210 and the modem 230 to provide a signal indicating which of the TX/RX paths the antenna unit 200 will be connected to.

The RF processing unit 220 including the N paths 222 and 224 receives baseband signals from the modem 230, modulates/encodes/converts the baseband signals into RF signals, and provides the RF signals to the RF switch module 210. Also, the RF processing unit 220 receives RF signals from the antenna unit 200 through the RF switch module 210, converts the RF signals into baseband signals, decodes/demodulates the baseband signals, and provides the resulting signals to the modem 230. Herein, the N paths 222 and 224 may include at least one TX path and at least one RX path for processing an RX signal received from the antenna unit 200, and may process signals of different frequency bands.

The modem 230 performs an overall communication operation (e.g., a voice call, a data communication, and a wireless Internet connection) of the mobile communication terminal. According to the present exemplary embodiment, the modem 230 includes a frequency control unit 232 to control and process a function for changing the current frequency band. The frequency control unit 232 determines whether a predetermined condition for changing the current frequency band is satisfied. If the predetermined condition is satisfied, the frequency control unit 232 determines a target frequency band and outputs a control signal corresponding to the target frequency band through one output port to the RF switch module 210 and the switch 204. The control signal outputted from the frequency control unit 232 may be implemented as illustrated in FIG. 5A or 5B. In this case, as illustrated in FIG. 5A or 5B, the frequency control unit 232 may output the control signal through a plurality of signal lines connected to the RF switch module 210. Herein, whether to change the current frequency band may be determined by determining whether the time, the quality of an RX signal, and the location of the mobile communication terminal satisfy a predetermined condition, or may be determined by determining whether a service is provided using the frequency band.

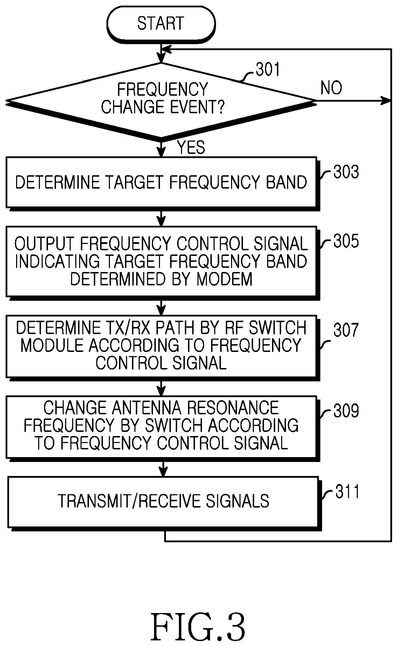

FIG. 3 is a flow diagram illustrating a process for changing a frequency band in a mobile communication terminal according to an exemplary embodiment of the present invention.

Referring to FIG. 3, in step 301, the mobile communication terminal determines whether a frequency change event occurs. The modem may determine whether a frequency change event occurs. Herein, whether the frequency change event occurs may be determined by determining whether a predetermined condition is satisfied or whether a service is provided using the frequency band. If a frequency change event is not determined to have occurred, the mobile communication terminal repeats step 301 and again determines whether a frequency change event occurs.

If a frequency change event is determined to have occurred, the mobile communication terminal proceeds to step 303. In step 303, the mobile communication terminal determines a target frequency band in a predetermined manner. The target frequency band may be determined by the modem. In step 305, the mobile communication terminal outputs a frequency control signal indicating the target frequency band.

In step 307, the mobile communication terminal performs a switching operation by the RF switch module according to the frequency control signal to determine one of a plurality of TX/RX paths for processing TX/RX signals. That is, the mobile communication terminal connects the antenna to one of the TX/RX paths. In step 309, the mobile communication terminal performs a switching operation by the switch according to the frequency control signal to change the resonance frequency of the antenna. Herein, if the frequency control signal indicating the target frequency band is outputted through a plurality of signal lines, a logical operation may be performed on signals received from some of the signal lines as illustrated in FIGs. 5A, 5B, 6A and 6B and the switching operation of the switch may be performed according to a result signal of the logic operation.

Although it has been described that steps 305 and 307 are performed sequentially, steps 305 and 307 may be performed simultaneously or may be performed in a reverse order.

Thereafter, the mobile communication terminal transmits/receives signals in step 311 and returns to step 301.

According to exemplary embodiments of the present invention, the mobile communication terminal may include additional components. Similarly, the functionality of two or more components may be integrated into a single component.

As described above, exemplary embodiments of the present invention share the control signal between the RF switch module for connecting the antenna to one of the TX/RX paths and the switch for varying the resonance frequency of the antenna, and control the TX/RX paths and the antenna resonance frequency according to one control signal outputted from the modem, thereby making it possible to reduce the number of output ports of the modem to reduce the size of the mobile communication terminal. Also, exemplary embodiments of the present invention remove an operation of synchronizing the timing of the control signal of the switch and the RF switch module, thus making it possible to reduce the load of the modem and reduce the complexity in the production and development of the mobile communication terminal.

## Claims

1. An apparatus for controlling a multi-band antenna (202) in a mobile communication terminal, the apparatus comprising:
a modem (230) arranged to output a first control signal corresponding to a target frequency band;
an antenna unit (200) comprising:
the multi-band antenna (202) arranged to support multiple frequency bands and to transmit/receive signals according to the resonance frequency; and
a switch (204) arranged to change the resonance frequency of the multi-band antenna (202) according to the first control signal;
a Radio Frequency RF processing unit (220) including a plurality of transmission/reception TX/RX paths (222-224) arranged to process TX/RX signals in different frequency bands received from or to be transmitted to the multi-band antenna (202); and
a switch module (210) arranged to connect the multi-band antenna (202) to one of the TX/RX paths (222 - 224) according to the first control signal;
**characterized in that** the switch (204) of the antenna unit (200) is arranged to receive the same first control signal as the switch module (210) by receiving the control signal through a signal line branching from a signal line through which the modem (230) provides the first control signal to the switch module (210).

2. The apparatus of claim 1, wherein the first control signal output by the modem (230) comprises a plurality of first control signals, and the antenna unit (200) comprises at least one logic circuit (511, 611) arranged to combine the plurality of first control signals output from the modem (230).

3. The apparatus of claim 2, wherein the logic circuit (511, 611) is arranged to receive a predetermined number of the plurality of first control signals, and to output a result of a logic operation performed on the received predetermined number of first control signals to the switch (204).

4. The apparatus of claim 3, wherein the logic circuit (511, 611) comprises an AND logic circuit.

5. The apparatus of claim 3, wherein the logic circuit (511, 611) comprises a NOR logic circuit.

6. The apparatus of claim 3, wherein the predetermined number of control signals is less than the plurality of first control signals.

7. A method for controlling a multi-band antenna (202) in a mobile communication terminal, the method comprising:
outputting (305), by a modem (230), a first control signal corresponding to a target frequency band;
changing (309), by a switch (204) of an antenna unit (200) further comprising the multi-band antenna (202), a resonance frequency of the multi-band antenna (202) supporting multiple frequency bands according to the first control signal; and
connecting (307), by a switch module (210), the multi-band antenna (202) to one of a plurality of transmission/reception TX/RX paths (222-224) arranged to process TX/RX signals in different frequency bands received from or to be transmitted to the multi-band antenna according to the first control signal;
wherein the switch (204) of the antenna unit (200) is arranged to receive the same first control signal as the switch module (210) by receiving the control signal through a signal line branching from a signal line through which the modem (230) provides the first control signal to the switch module (210).

8. The method of claim 7, wherein the first control signal output by the modem (230) comprises a plurality of first control signals, and the antenna unit (200) combines the plurality of first control signals using a logic circuit (511, 611) and changes the resonance frequency according to the combined first control signals.

9. The method of claim 8, wherein the logic circuit (511, 611) receives a predetermined number of the plurality of first control signals, and outputs a result of a logic operation performed on the received predetermined number of first control signals to the switch (204).

10. The method of claim 8, wherein the logic circuit (511, 611) comprises an AND logic circuit.

11. The method of claim 8, wherein the logic circuit (511, 611) comprises a NOR logic circuit.

12. The method of claim 9, wherein the predetermined number of first control signals is less than the plurality of first control signals.

## Patentansprüche

1. Vorrichtung zum Steuern einer Mehrbandantenne (202) in einem mobilen Kommunikationsendgerät, wobei die Vorrichtung Folgendes umfasst:
ein Modem (230), das dafür ausgelegt ist, ein erstes Steuersignal entsprechend einem Zielfrequenzband auszugeben;
eine Antenneneinheit (200), die Folgendes umfasst:
wobei die Mehrbandantenne (202) so angeordnet ist, dass sie mehrere Frequenzbänder unterstützt und Signale entsprechend der Resonanzfrequenz sendet/empfängt; und
einen Schalter (204), der dafür ausgelegt ist, die Resonanzfrequenz der Mehrbandantenne (202) gemäß dem ersten Steuersignal zu ändern;
eine Hochfrequenz-HF-Verarbeitungseinheit (220), die mehrere Sende/Empfangs-TX/RX-Pfade (222 bis 224) umfasst, die dafür ausgelegt sind, TX/RX-Signale in verschiedenen Frequenzbändern zu verarbeiten, die von der Mehrbandantenne (202) empfangen oder zu dieser gesendet werden; und
ein Schaltmodul (210), das dafür ausgelegt ist, die Mehrbandantenne (202) mit einem der TX/RX-Pfade (222 bis 224) gemäß dem ersten Steuersignal zu verbinden;
**dadurch gekennzeichnet, dass** der Schalter (204) der Antenneneinheit (200) dafür ausgelegt ist, das gleiche erste Steuersignal wie das Schaltmodul (210) zu empfangen, indem das Steuersignal durch eine Signalleitung empfangen wird, die von einer Signalleitung abzweigt, durch die das Modem (230) das erste Steuersignal an das Schaltmodul (210) anlegt.

2. Vorrichtung nach Anspruch 1, wobei das erste Steuersignal, das durch das Modem (230) ausgegeben wird, eine Vielzahl erster Steuersignale umfasst, und die Antenneneinheit (200) mindestens eine Logikschaltung (511, 611) umfasst, die dafür ausgelegt ist, die Vielzahl von ersten Steuersignalen, die von dem Modem (230) ausgegeben werden, zu kombinieren.

3. Vorrichtung nach Anspruch 2, wobei die Logikschaltung (511, 611) dafür ausgelegt ist, eine vorbestimmte Anzahl der Vielzahl von ersten Steuersignalen zu empfangen und ein Ergebnis einer Logikoperation, die an der empfangenen vorbestimmten Anzahl von ersten Steuersignalen ausgeführt wurde, an den Schalter (204) auszugeben.

4. Vorrichtung nach Anspruch 3, wobei die Logikschaltung (511, 611) eine UND-Verknüpfungsschaltung umfasst.

5. Vorrichtung nach Anspruch 3, wobei die Logikschaltung (511, 611) eine NOR-Verknüpfungsschaltung umfasst.

6. Vorrichtung nach Anspruch 3, wobei die vorbestimmte Anzahl von Steuersignalen kleiner als die Vielzahl von ersten Steuersignalen ist.

7. Verfahren zum Steuern einer Mehrbandantenne (202) in einem mobilen Kommunikationsendgerät, wobei das Verfahren Folgendes umfasst:
Ausgeben (305) eines ersten Steuersignals, das einem Zielfrequenzband entspricht, durch ein Modem (230);
Ändern (309) einer Resonanzfrequenz der Mehrbandantenne (202)(209) durch einen Schalter (204) einer Antenneneinheit (200), die ferner die Mehrbandantenne (202) umfasst, die mehrere Frequenzbänder gemäß dem ersten Steuersignal umfasst; und
Verbinden (307) der Mehrbandantenne (202) mit einem einer Vielzahl von Sende/Empfangs-TX/RX-Pfaden (222 bis 224) durch ein Schaltmodul (210), die dafür ausgelegt sind, TX/RX-Signale in verschiedenen Frequenzbändern, die von der Mehrbandantenne empfangen oder an diese übertragen werden, gemäß dem ersten Steuersignal zu verarbeiten;
wobei der Schalter (204) der Antenneneinheit (200) dafür ausgelegt ist, das gleiche erste Steuersignal wie das Schaltmodul (210) zu empfangen, indem das Steuersignal durch eine Signalleitung empfangen wird, die von einer Signalleitung abzweigt, durch die das Modem (230) das erste Steuersignal an das Schaltmodul (210) anlegt.

8. Verfahren nach Anspruch 7, wobei das erste Steuersignal, das durch das Modem (230) ausgegeben wird, eine Vielzahl erster Steuersignale umfasst, und die Antenneneinheit (200) die Vielzahl von ersten Steuersignalen unter Verwendung einer Logikschaltung (511, 611) kombiniert und die Resonanzfrequenz entsprechend den kombinierten ersten Steuersignalen ändert.

9. Verfahren nach Anspruch 8, wobei die Logikschaltung (511, 611) eine vorbestimmte Anzahl der Vielzahl von ersten Steuersignalen empfängt und ein Ergebnis einer Logikoperation, die an der empfangenen vorbestimmten Anzahl von ersten Steuersignalen ausgeführt wurde, an den Schalter (204) ausgibt.

10. Verfahren nach Anspruch 8, wobei die Logikschaltung (511, 611) eine UND-Verknüpfungsschaltung umfasst.

11. Verfahren nach Anspruch 8, wobei die Logikschaltung (511, 611) eine NOR-Verknüpfungsschaltung umfasst.

12. Verfahren nach Anspruch 9, wobei die vorbestimmte Anzahl von ersten Steuersignalen kleiner als die Vielzahl von ersten Steuersignalen ist.

## Revendications

1. Un appareil de commande d'une antenne multibande (202) dans un terminal de communication mobile, l'appareil comprenant :
un modem (230) agencé de façon à produire en sortie un premier signal de commande correspondant à une bande de fréquences cible,
une unité d'antenne (200) comprenant :
l'antenne multibande (202) agencée de façon à prendre en charge une pluralité de bandes de fréquences et à transmettre/recevoir des signaux en fonction de la fréquence de résonance, et
un commutateur (204) agencé de façon à modifier la fréquence de résonance de l'antenne multibande (202) en fonction du premier signal de commande,
une unité de traitement radioélectrique RF (220) comprenant une pluralité de trajets de transmission/réception TX/RX (222-224) agencée de façon à traiter des signaux TX/RX dans différentes bandes de fréquences reçus de ou à transmettre vers l'antenne multibande (202), et
un module commutateur (210) agencé de façon à raccorder l'antenne multibande (202) à l'un des trajets TX/RX (222-224) en fonction du premier signal de commande,
**caractérisé en ce que** le commutateur (204) de l'unité d'antenne (200) est agencé de façon à recevoir le même premier signal de commande que le module commutateur (210) par la réception du signal de commande par l'intermédiaire d'une ligne de signal partant d'une ligne de signal par l'intermédiaire de laquelle le modem (230) fournit le premier signal de commande au module commutateur (210).

2. L'appareil selon la Revendication 1, où le premier signal de commande produit en sortie par le modem (230) comprend une pluralité de premiers signaux de commande, et l'unité d'antenne (200) comprend au moins un circuit logique (511, 611) agencé de façon à combiner la pluralité de premiers signaux de commande produits en sortie à partir du modem (230).

3. L'appareil selon la Revendication 2, où le circuit logique (511, 611) est agencé de façon à recevoir un nombre prédéterminé de la pluralité de premiers signaux de commande et à produire en sortie un résultat d'une opération logique exécutée sur le nombre prédéterminé reçu de premiers signaux de commande vers le commutateur (204).

4. L'appareil selon la Revendication 3, où le circuit logique (511, 611) comprend un circuit logique ET.

5. L'appareil selon la Revendication 3, où le circuit logique (511, 611) comprend un circuit logique NON-OU.

6. L'appareil selon la Revendication 3, où le nombre prédéterminé de signaux de commande est inférieur à la pluralité de premiers signaux de commande.

7. Un procédé de commande d'une antenne multibande (202) dans un terminal de communication mobile, le procédé comprenant :
la production en sortie (305), par a modem (230), d'un premier signal de commande correspondant à une bande de fréquences cible,
la modification (309), par un commutateur (204) d'une unité d'antenne (200) comprenant en outre l'antenne multibande (202), d'une fréquence de résonance de l'antenne multibande (202) qui prend en charge une pluralité de bandes de fréquences en fonction du premier signal de commande, et
le raccordement (307), par un module commutateur (210), de l'antenne multibande (202) à un trajet d'une pluralité de trajets de transmission/réception TX/RX (222-224) agencé de façon à traiter des signaux TX/RX dans différentes bandes de fréquences reçus de ou à transmettre vers l'antenne multibande en fonction du premier signal de commande,
où le commutateur (204) de l'unité d'antenne (200) est agencé de façon à recevoir le même premier signal de commande que le module commutateur (210) par la réception du signal de commande par l'intermédiaire d'une ligne de signal partant d'une ligne de signal par l'intermédiaire de laquelle le modem (230) fournit le premier signal de commande au module commutateur (210).

8. Le procédé selon la Revendication 7, où le premier signal de commande produit en sortie par le modem (230) comprend une pluralité de premiers signaux de commande, et l'unité d'antenne (200) combine la pluralité de premiers signaux de commande au moyen d'un circuit logique (511, 611) et modifie la fréquence de résonance en fonction des premiers signaux de commande combinés.

9. Le procédé selon la Revendication 8, où le circuit logique (511, 611) reçoit un nombre prédéterminé de la pluralité de premiers signaux de commande et produit en sortie un résultat d'une opération logique exécutée sur le nombre prédéterminé reçu de premiers signaux de commande vers le commutateur (204).

10. Le procédé selon la Revendication 8, où le circuit logique (511, 611) comprend un circuit logique ET.

11. Le procédé selon la Revendication 8, où le circuit logique (511, 611) comprend un circuit logique NON-OU.

12. Le procédé selon la Revendication 9, où le nombre prédéterminé de premiers signaux de commande est inférieur à la pluralité de premiers signaux de commande.
